# EUROPEAN PATENT APPLICATION

(11) **EP 1 864 904 A2**
(43) Date of publication of application: **12.12.2007**
(21) Application number: 07017653.2
(22) Date of filing: 23.07.2002
(51) Int. Cl.: B62M 3/00, B62K 19/16

(54) **Crank lever for a bicycle**

(30) Priority: 03.08.2001 IT TO20010782
(62) Divisional of application: 02016270.7
(71) Applicant: Campagnolo Srl, 36100 Vicenza (VI) (IT)
(72) Inventor: Dal Pra', Giuseppe, 36010 Zanè (Vicenza) (IT)
(74) Representative: Checcacci, Giorgio

(57) **Abstract**

This crank lever for a bicycle has a body formed by a reinforced-fibre mouldable thermosetting material (48), with at least one insert (44, 46) embedded in the reinforced-fibre mouldable thermosetting material (48), and it is characterised in that the body has a hollow cross-section.

## Description

The present invention relates to a crank lever for a bicycle.

Recently, crank levers have been proposed which are provided with two inserts made of metal material (an aluminium alloy or the like) which are set at the ends of the crank-lever body and are enclosed in a shell of composite material formed by a high-strengthfibre (typically, carbon fibre) fabric enclosed in a matrix of thermosetting plastic material. The process currently adopted for producing crank levers of the above type envisages the use of a pre-formed structure including the two inserts and a central filling core. On the said pre-formed structure there are wound layers made of carbon-fibre fabric embedded in a matrix of plastic material. Finally, the ensemble thus obtained is subjected to a thermosetting step in a mould.

This known process is laborious and difficult to automate, above all as regards the step of wrapping the inserts and filling core with layers of fibre-reinforced plastic material.

An aim of the present invention is to provide a process for producing crank levers for bicycles of the type specified above that is simpler and is more easily automatable.

The object of the present invention is to reduce the weight of the crank lever.

According to the present invention, the above object is achieved by a crank lever having the characteristics that form the subject of the attached claims.

The present invention will now be described in detail with reference to the attached drawings, which are provided purely by way of non-limiting example and in which:
- Figures 1 and 2 are schematic illustrations of two operating steps of a first embodiment of a process according to the present invention;
- Figure 3 is a perspective view illustrating the crank lever that is obtained at the end of the process illustrated in Figures 1 and 2;
- Figures 4 and 5 are schematic illustrations of a second embodiment of a process according to the present invention;
- Figures 6 to 9 are schematic sectional views of the moulding equipment, illustrating the various modes of implementation of the step of moulding the fibre-reinforced thermosetting material;
- Figure 7A is a schematic longitudinal section of the equipment illustrated in Figures 6 and 7;
- Figures 10, 11 and 12 are schematic axial sections illustrating different types of crank levers that can be made using the process according to the invention;
- Figures 13 and 14 are schematic views illustrating the equipment for the production of a crank lever with arms for fixing the chain rings; and
- Figures 15 and 16 are plan views of two crank levers with arms for fixing the chain rings that can be obtained with the process according to the invention.

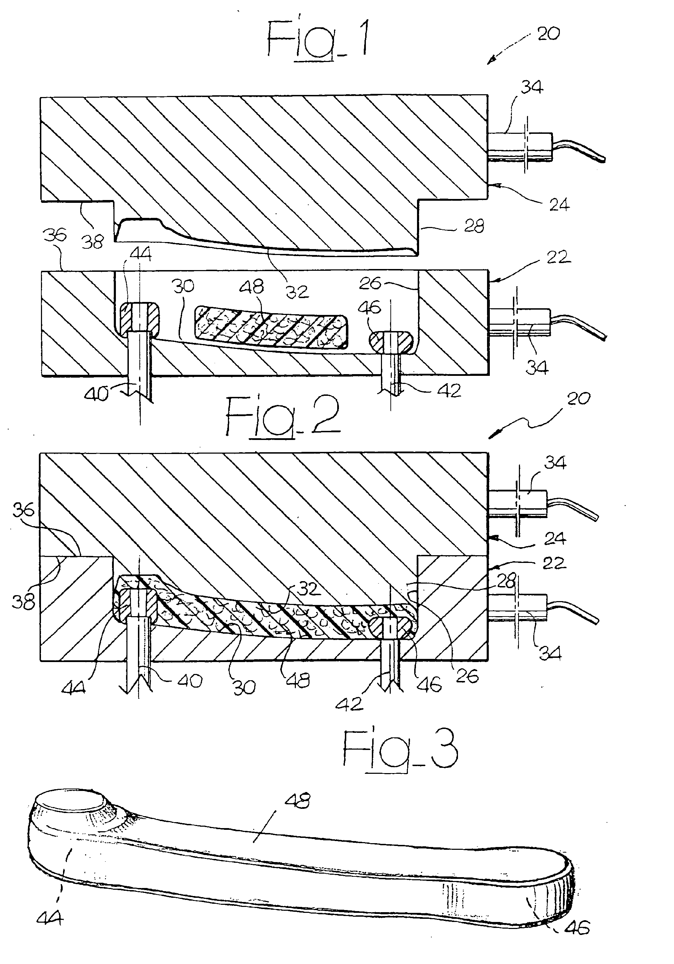

With reference to Figures 1 and 2, number 20 designates moulding equipment including two half-moulds 22, 24, which are mobile with respect to one another between the open position illustrated in Figure 1 and the closed position illustrated in Figure 2. The half-mould 22 has a cavity 26 which is designed to receive a moulding portion 28 of the second half-mould 24. The cavity 26 and the moulding portion 28 have respective moulding surfaces 30, 32. The two half-moulds 22, 24 are made of metal material and are provided with heating means, designated as a whole by 34, preferably consisting of resistance-heating elements. The two half-moulds 22, 24 can be provided with respective mutually co-operating arrest surfaces 36, 38 which define the end-of-travel position of the half-moulds 22, 24, which corresponds to the closed position of Figure 2. The first half-mould 22 is provided with a pair of extractor elements 40, 42 which move in the direction of their own axis for extraction of the finished crank lever at the end of the moulding process.

The process for the production of a crank lever for a bicycle according to the present invention envisages providing a pair of metal inserts 44, 46 in a pre-set position in the cavity 26 of the first half-mould 22. Preferably, the inserts 44, 46 are mounted on the ends of the extractor elements 40, 42. A pre-set amount of fibre-reinforced mouldable material is set in the cavity 26. The material 48 is in the plastic state so that it can slide under the action of a moulding pressure so as to fill completely the moulding cavity defined between the moulding surfaces 30, 32 in the closed configuration of the two half-moulds 22, 24. The material 48 preferably consists of carbon fibres embedded in a thermosetting plastic matrix, but it can be selected among carbon fibres, glass fibres, aramidic fibres, boron fibres, ceramic fibres or any combinations thereof.

When the half-moulds 22, 24 are closed, the moulding surfaces 30, 32 exert, on the material 48 in the plastic state, a pressure which causes the plastic material to slide into the moulding seat. As it is illustrated in Figure 2, the material 48 completely fills the moulding seat defined between the moulding surfaces 30, 32. Again as may be seen in Figure 2, the material 48 in the closed position of the half-moulds 22, 24 covers almost entirely the inserts 44, 46, except for the portions of the latter in contact with the bottom wall 30 of the cavity 26. During the moulding step, the half-moulds 22, 24 are heated by means of the heating elements 34 up to a temperature equal to or higher than the thermosetting temperature of the material 48. The moulding equipment 20 remains in the closed position for a time sufficient to transfer, to the material 48, the amount of heat necessary for bringing the material itself up to the thermosetting temperature. Next, the half-moulds 22, 24 are opened, and the finished crank lever having the shape illustrated in Figure 3 is extracted. The inserts 44, 46 are embedded in a high-strength rigid body formed by fibres enclosed in a hardened plastic matrix.

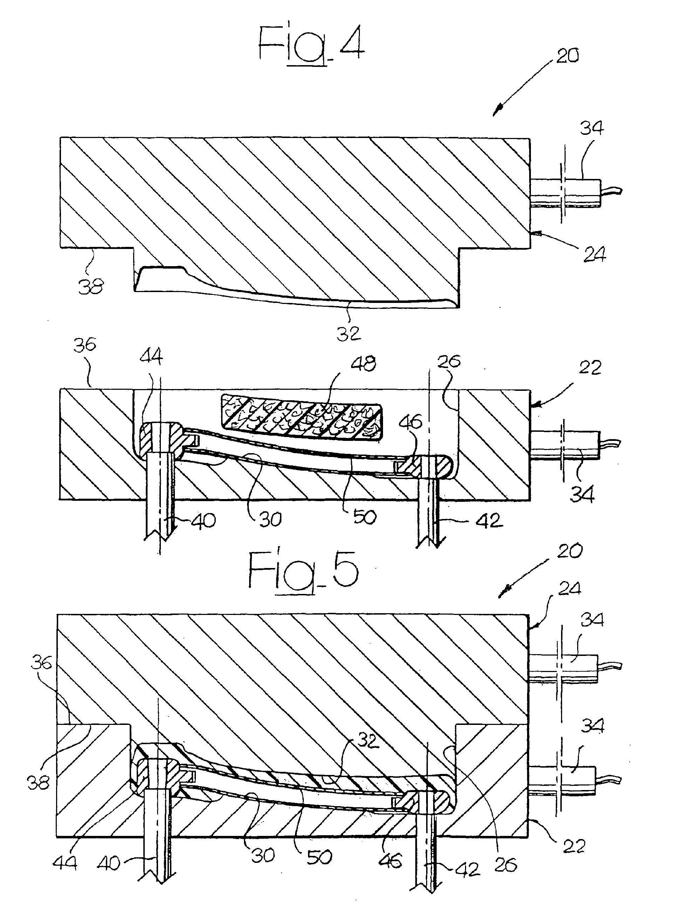

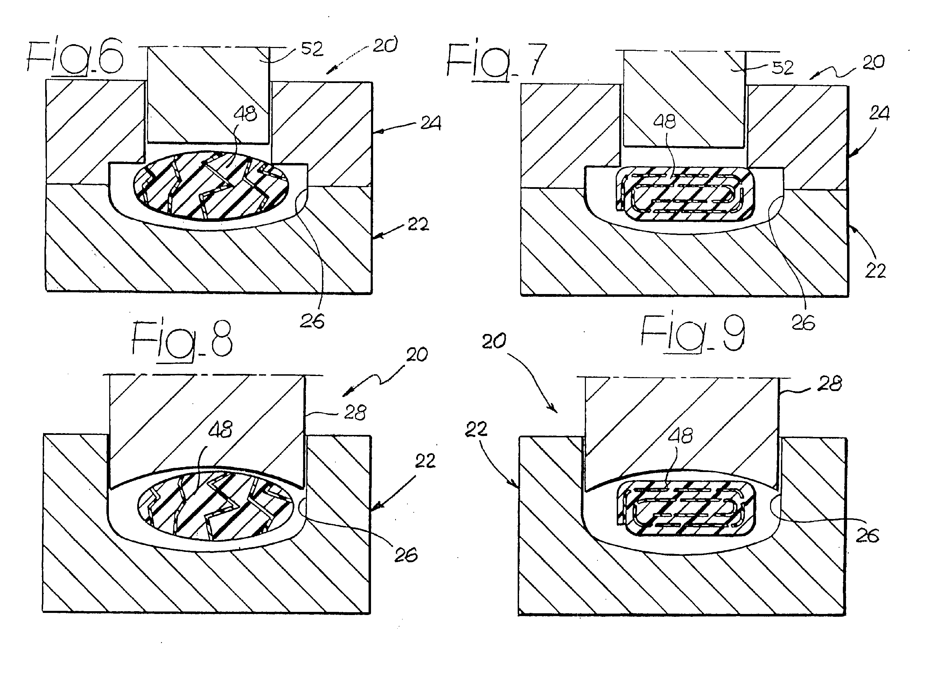

Figures 4 and 5 illustrate a variant of the process according to the present invention. The items corresponding to the ones previously described are designated by the same reference numbers. The moulding process is practically identical to the one previously illustrated. The only difference lies in the fact that a tubular element 50 is set in the cavity 26, the said tubular element 50 being at least partially coated by the fibre-reinforced plastic material 48 during the moulding operation. In this way it is possible to reduce further the weight of the finished crank lever since the central part of the crank lever is hollow. The tubular element 50 may be made of a light alloy, or else of a fibre-reinforced plastic matrix.

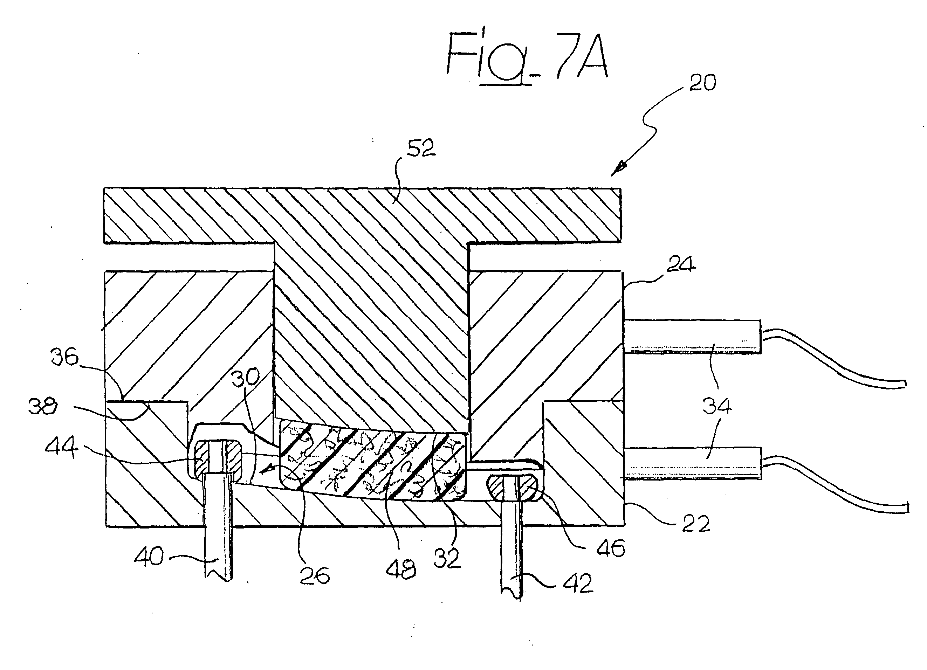

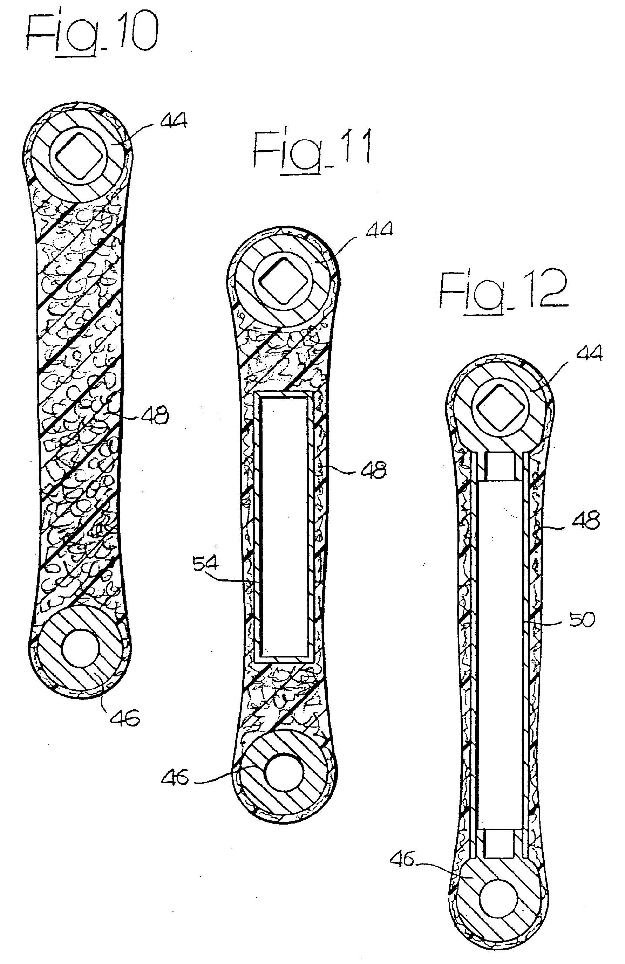

Figures 6 to 9 are schematic illustrations of a number of variants of the moulding equipment that may be used in a process according to the present invention. In Figures 6, 7 and 7A the half-moulds 22, 24 define, in the closed position, a moulding seat 26 with undercut cross section. A slider 52 is used to apply the moulding pressure on the material 48. In the version of Figure 6, the material 48 consists of a mass in which the reinforcement fibres are set at random in the matrix of thermosetting material. In the variant of Figure 7, the reinforcement fibres are, instead, arranged in an orderly way. For example, the material 48 may consist of a ribbon in which the fibres extend in the longitudinal direction, and the said ribbon is wound onto itself before being set inside the moulding equipment, in such a way that the reinforcement fibres are set according to a general spiral configuration. In the variants illustrated in Figures 8 and 9, the first half-mould 22 has, in its transverse cross-sectional view, a U-shaped moulding seat inside which the moulding portion 28 of the second half-mould is slidably mounted. In a way similar to what was described previously, in the variant of Figure 8 the reinforcement fibres are set at random inside the mass of plastic material, whereas in the variant of Figure 9 the fibres are arranged in an orderly way, for example according to a spiral configuration.

Figures 10, 11 and 12 are schematic longitudinal sectional views of three different crank levers that may be produced with the process according to the present invention. In the case of Figure 10, the body of the crank lever is made entirely of fibre-reinforced plastic material, embedded in which are the two inserts 44, 46 made of light alloy, which are designed to be respectively fixed to the crank pin and to one pedal. In the variant of Figure 11, inside the body of the crank lever there is embedded a hollow element 54, the ends of which are set at a distance from the inserts 44, 46, whereas in the further variant of Figure 12 a crank lever is illustrated, embedded in which is a tubular element 50, the ends of which establish a shape fit with the inserts 44, 46. The said crank lever is obtained by means of the process schematically illustrated in Figures 4 and 5.

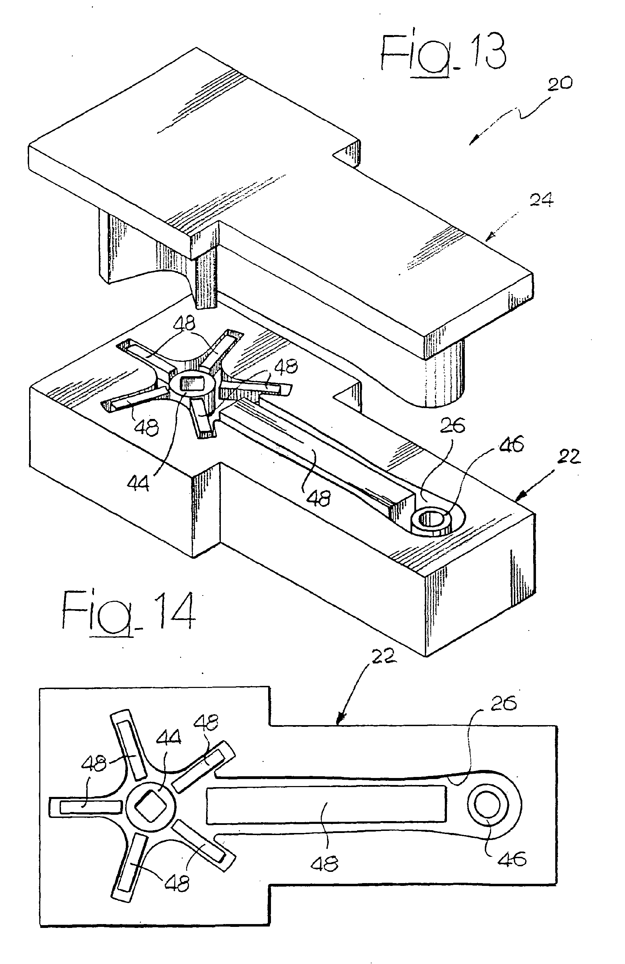

Figures 13 and 14 are schematic illustrations of moulding equipment for the production of a right-hand crank lever provided with integral arms for fixing the chain rings. From a conceptual standpoint, the equipment 20 is identical to the equipment previously described. The only difference lies in the different shape of the moulding seat 26, which has cavities designed to form the arms which extend in a radial direction form the area containing the insert 44 designed to be fixed to the crank pin. The fibre-reinforced material may be set both in the gap between the two inserts 44, 46 and inside each of the cavities that are to form the arms. The material 48 set in a position corresponding to the cavities that are to form the arms may be joined to or separate from the material that is to form the body of the crank lever.

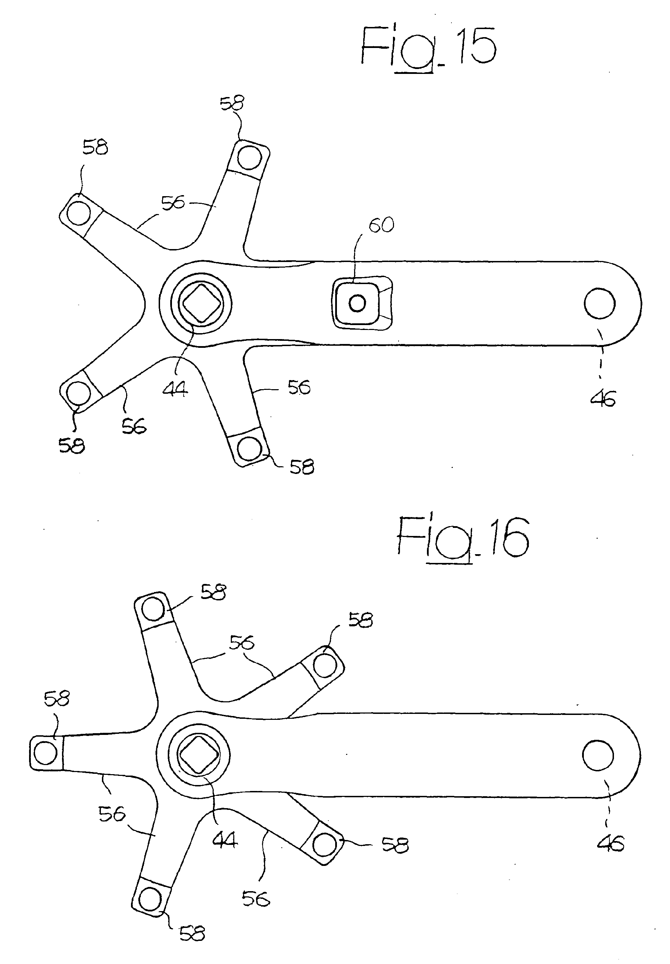

Figures 15 and 16 are schematic plan views of two right-hand crank levers that may be obtained by means of the process according to the invention. In the variant of Figure 15, the crank lever has four arms 56 provided, at their respective ends, with portions for fixing the chain rings. A fifth fixing point for fixing the chain rings is formed by a third metal insert 60 embedded in the crank-lever body. In the variant of Figure 16 the crank lever is instead provided with five arms 56, and the insert 60 is not present.

Of course, without prejudice to the principle of the invention, the details of construction and the embodiments may vary widely with respect to what is described and illustrated herein purely by way of example, without thereby departing from the scope of the present invention as defined in the attached claims.

For example, in a variant, the metal inserts 44 and 46 can be omitted, so that the body of the crank lever is formed entirely by a fibre-reinforced mouldable thermosetting material, both in the solid and in the hollow cross-section solutions. It is clear that, in this variant, the tubular body which allows to obtain the hollow cross-section of the crank lever is made of materials which do not give any substantial contribution to the mechanical strength of the crank lever and which, at the end of the process, can be removed.

## Claims

1. Crank lever for a bicycle, having a body formed by a reinforced-fibre mouldable thermosetting material (48), with at least one insert (44, 46) embedded in the reinforced-fibre mouldable thermosetting material (48), **characterised in that** the body has a hollow cross-section.

2. Crank lever according to claim 1, wherein said reinforced-fibre mouldable thermosetting material is chosen among carbon fibres, glass fibres, aramidic fibres, boron fibres, ceramic fibres or any combinations thereof.

3. Crank lever according to claim 1, wherein fibres are set at random in the thermosetting material.

4. Crank lever according to claim 1, wherein fibres are arranged in an orderly way in the thermosetting material.

5. Crank lever according to claim 1, including an hollow element (54) the ends of which are set at a distance from said at least one insert (44, 46).

6. Crank lever according to claim 1, including an hollow tubular element (50) the ends of which establish a shape fit with said at least one insert (44, 46).
